Europäisches Patentamt

European Patent Office

Office européen des brevets

(19)

(11) **EP 0 793 997 A1**

(12) **EUROPÄISCHE PATENTANMELDUNG**

(43) Veröffentlichungstag:
**10.09.1997 Patentblatt 1997/37**

(51) Int. Cl.[6]: **B01D 61/02**, B01D 3/36,
B01D 61/58

(21) Anmeldenummer: 96810118.8

(22) Anmeldetag: **04.03.1996**

(84) Benannte Vertragsstaaten:
**DE**

(71) Anmelder:
**Ciba Specialty Chemicals Holding Inc.**
**4057 Basel (CH)**

(72) Erfinder:
• **Schirg, Peter**
**4133 Pratteln (CH)**
• **Mirza, Sohail**
**4153 Reinach (CH)**

(54) **Verfahren und Apparatur zur Trennung von Flüssigkeitsgemischen**

(57) Ein Verfahren zur Trennung von Flüssigkeitsgemischen (F), insbesondere azeotropen Flüssigkeitsgemischen, die mindestens zwei Komponenten (K1,K2) enthalten, umfasst eine Permeationsstufe (PS), in welcher das Flüssigkeitsgemisch (F) in ein Retentat (R) und ein Permeat (P) aufgeteilt wird, sowie eine Rektifikationsstufe (RS), in welcher das Retentat (R) und/oder das Permeat (P) destilliert werden. In der Permeationsstufe (PS) wird das zu trennende Flüssigkeitsgemisch (F) mittels einer Filtervorrichtung (5) gefiltert, die eine molekulare Trenngrenze aufweist, welche grösser ist als jedes der Molekulargewichte der Komponenten (K1,K2) des Flüssigkeitsgemisches (F).

Fig. 1

EP 0 793 997 A1

**Beschreibung**

Die Erfindung betrifft ein Verfahren und eine Apparatur zur Trennung von Flüssigkeitsgemischen, die mindestens zwei Komponenten enthalten, gemäss dem Oberbegriff des jeweiligen unabhängigen Patentanspruchs. Im speziellen betrifft die Erfindung die Trennung von azeotropen Flüssigkeitsgemischen.

Unter den heute bekannten Trennverfahren, mit denen Flüssigkeitsgemische in ihre Komponenten zerlegt werden, spielt die Destillation eine wichtige Rolle. Dieses bereits sehr lange praktizierte Verfahren, für das zahlreiche Ausgestaltung und diverse Vorrichtungen bekannt sind, wird sowohl im Labor für Analyse- und Forschungszwecke als auch in der industriellen Produktion sehr häufig eingesetzt. Die Destillation basiert prinzipiell auf der Verdampfung eines Flüssigkeitsgemisches und der anschliessenden Kondensation des dabei gebildeten Dampfes. Eine besondere Form der Destillation, die auch in der industriellen Produktion häufig Anwendung für die Zerlegung eines Füssigkeitsgemisches in seine möglichst reinen Komponenten findet, ist die Rektifikation. Bei diesem Verfahren befindet sich zwischen Verdampfer und Kondensator eine Kolonne, in der sich ein Teil des im Kondensators gebildeten Kondensats flüssig als Rücklauf im Gegenstrom zu den aus der Verdampfereinrichtung aufsteigenden Dämpfen abwärts bewegt. Dabei kommt es zu einer unmittelbarer Berührung zwischen Flüssigkeit und Dampf. Die Rektifikation kann als eine Vielzahl hintereinander ausgeführter Destillationen aufgefasst werden, wobei der Trenneffekt der einfachen Destillation der Trennwirkung eines theoretischen Bodens gleichgesetzt wird

Ein bekanntes Problem bei der Trennung von Flüssigkeitsgemischen resultiert daraus, dass zahlreiche Flüssigkeitsgemische für bestimmte Konzentrationsverhältnisse ihrer Komponenten ein Azeotrop bilden. Dieser azeotrope Punkt ist dadurch ausgezeichnet, dass die Zusammensetzung des Dampfes gleich ist wie die Zusammensetzung der Flüssigkeit. Dies bedeutet insbesondere, dass ein solches Flüssigkeitsgemisch einen konstanten Siedepunkt aufweist, der im allgemeinen höher oder niedriger liegt als die Siedepunkte der einzelnen Komponenten. Somit lässt sich ein Flüssigkeitsgemisch mit azeotroper Zusammensetzung durch konventionelle Destillation oder Rektifikation nicht mehr in seine Komponenten aufspalten. Destilliert oder rektifiziert man ein Flüssigkeitsgemisch, welches ein Azeotrop bilden kann, aber noch nicht in seiner azeotropen Zusammensetzung vorliegt, so lassen sich aus diesem Gemisch solange Komponenten abtrennen, bis das Gemisch seinen azeotropen Punkt erreicht. Dann ist keine weitere Aufspaltung mittels einfacher Destillation mehr möglich. Ein bekanntes Beispiel hierfür ist ein Gemisch aus Ethanol und Wasser. Bei einer Konzentration von 95,6% Ethanol und 4,4% Wasser bilden diese beiden Komponenten ein Azeotrop, so dass reineres Ethanol mittels einfacher Destillation nicht herstellbar ist.

Eine bekannte Möglichkeit, dieses Problem zu umgehen, stellen Zweidruckverfahren dar. Hierbei werden zwei Rektifikationskolonen verwendet, die unter verschiedenen Drücken arbeiten. Durch Veränderung des Druckes kann die Lage des azeotropen Punktes bei manchen Gemischen etwas verschoben werden. Solche Zweidruckverfahren sind jedoch häufig mit einem hohen apparativen und energetischen Aufwand verbunden, falls der azeotrope Punkt durch Druckänderung nur wenig verschoben werden kann, da dann zusätzlich zu prinzipiell nötigen Kreisströmen auch noch beide Rektifikationskolonnen hohe Rücklaufverhältnisse und eine grosse Anzahl theoretischer Böden aufweisen müssen. Damit wird der Energieverbrauch im Vergleich zur einfachen Rektifikation deutlich höher. Diese Faktoren wirken sich negativ auf die Betriebskosten und damit auf die Wirtschaftlichkeit einer solchen Anlage aus. Ferner ist die Anwendung von Zweidruckverfahren auf solche azeotropen Gemische beschränkt, deren azeotroper Punkt eine ausreichend grosse Druckabhängigkeit aufweist. Wenn die Druckabhängigkeit gering ist, resultieren unerwünscht grosse Kreisströme und damit grosse nötige Kolonnendurchmesser. Vor allem in der industriellen Anwendung, wo oft grosse Mengen an zu trennenden Flüssigkeitsgemischen anfallen, sind die erforderlichen grossen Druckbehälter mit siedenden Flüssigkeiten aus Sicherheitsgründen nicht unbedenklich.

Andere Verfahren zur Trennung azeotroper Flüssigkeitsgemische, wie beispielsweise Extraktiv-Destillation oder Schleppmittel-Rektifikation beruhen darauf, dem Flüssigkeitsgemisch eine Hilfskomponente zur Überwindung oder zum Aufbrechen der azeotropen Zusammensetzung beizufügen. Aber auch solche Verfahren sind apparativ sehr aufwendig und damit kostenintensiv, weil sie einerseits sehr grosser interner Kreisströme bedürfen und andererseits die Hilfskomponente anschliessend in meist recht aufwendiger Weise wieder entfernt werden muss. Speziell in der pharmazeutischen Produktion, wo sehr hohe Anforderungen an die Reinheit der Endprodukte erfüllt werden müssen, besteht zudem die Gefahr, dass Rückstände solcher Hilfskomponenten, die gesundheitsschädlich sein können, in den Endprodukten verbleiben.

Weiterhin ist es bekannt, zur Trennung azeotroper Flüssigkeitsgemische die Rektifikation mit der Pervaporation zu kombinieren. Die Pervaporation ist ein Membrantrennverfahren, bei dem sich auf der einen Seite der Membran das Gemisch in der flüssigen Phase befindet. Auf der anderen Seite, der Gasseite, wird durch Abpumpen ein Vakuum bzw. ein Unterdruck erzeugt. Die speziellen Pervaporationsmembranen weisen unterschiedliche Permeabilitäten für die verschiedenen Komponenten des Flüssigkeitsgemisches auf. Durch kontinuierliches Abpumpen auf der Gasseite wird ein Konzentrationsgefälle über die Membran aufrechterhalten, aufgrund dessen die Dämpfe durch die Membran wandern. Wegen der selektiven Permeabilität der Membran für die verschiedenen Komponenten lässt sich somit eine Trennung erzielen. Anschliessend muss der auf der Gasseite abgepumpte Dampf wieder kondensiert werden.

R. Rautenbach *et al.* beschreiben beispielsweise in ihrem Artikel in *Proceedings of Seventh International Conference on Pervaporation in the Chemical Industry*, Reno, Nevada (1995) unter anderem eine Verfahrenskombination von Rektifikation und Pervaporation zur Trennung azeotroper Gemische. Ein azeotropes Gemisch aus Methanol und Dimethylcarbonat wird einer Pervaporationsmembran zugeführt. Das Permeat enthält etwa 95 Gewichtsprozent Methanol, das entweder direkt entnommen und kondensiert werden kann, oder, falls eine höhere Reinheit erwünscht ist, in eine Rektifizierkolonne eingespeist werden kann. Das Retentat, welches nun aufgrund des permeierten Methanols keine azeotrope Zusammensetzung mehr aufweist, wird einer zweiten Rektifizierkolonne zugeführt, in welcher das Dimethylcarbonat abgespalten wird. Die Pervaporationsmembran dient somit zum Aufbrechen der azeotropen Zusammensetzung und zum Abtrennen des Methanols. Nachteilig an der Verfahrenskombination Rektifikation/Pervaporation ist jedoch zum einen - wie von den oben zitierten Autoren selbst erwähnt - dass die Pervaporation ein sehr kostenintensives Verfahren ist. Der Grund hierfür ist vor allem der hohe apparative Aufwand durch das verfahrensbedingt nötige Vakuum auf der Permeatseite der Membran und die relativ geringen Flussraten durch die Membran, die sich vor allem für industrielle Anwendungen als sehr störend erweisen. Zum anderen ist der Einsatz dieses Kombinationsverfahrens bezüglich der zu trennenden Gemische stark eingeschränkt, weil heute für viele Flüssigkeitsgemische noch keine geeigneten Pervaporationsmembranen bekannt sind.

Auch in der US-A-4,774,365 wird ein Kombinationsverfahren aus Pervaporation und Destillation vorgeschlagen, um Alkohole von Äthern abzuscheiden.

Ein weiteres Trennverfahren, welches beispielsweise zur Meer- und Brackwasserentsalzung eingesetzt wird, ist die Umkehrosmose. Bei der Umkehrosmose werden Membranen eingesetzt, welche für das Lösungsmittel, also üblicherweise Wasser, durchlässig sind und welche die gelösten Substanzen, beispielsweise Salze, zurückhalten. Durch Ausüben von Druck auf der Einspeiseseite (Feedseite) der Membran wandert das Lösungsmittel gegen das Konzentrationsgefälle durch die Membran. Von entscheidender Bedeutung für die Trennleistung bei der Umkehrosmose ist die Permselektivität der Membran sowie der transmembrane Druck.

In einem Artikel in *der IVT-Information Jahrgang 24 (1994), Heft 2, S. 12-23* der RWTH Aachen (Deutschland) bzw. in der Zeitschrift *Chemie Ingenieur Technik 9/95 (1995) S. 1099-1100*, beschreibt R. Knauf, dass die Umkehrosmose auch für die selektive Trennung nicht-wässriger Systeme geeignet ist und somit auch als Verfahren zur Azeotropaufspaltung in bestehende Verfahrensabläufe integriert werden könnte. Als Lösungsmittel verwendet R. Knauf Ethanol und Methanol. Für unpolare aliphatische Kohlenwasserstoffe, die mit einer relativ geringen Konzentration von 3 Molprozent in Methanol gelöst sind, lassen sich mittels Umkehrosmose Rückhalte von über 90% aus dieser Methanollösung erzielen. R. Knauf betont, dass die wichtigste Forderung für die erfolgreiche Anwendung der Umkehrosmose im Bereich nicht-wässriger Lösungen, auch im Hinblick auf die Erzielung genügend grosser Permeatflussraten, die Aufprägung hoher transmembraner Druckdifferenzen ist. R. Knauf berichtet von transmembranen Druckdifferenzen von bis zu 200 bar. Hierin liegt aber ein grosses Problem der Umkehrosmose. Hohe transmembrane Druckdifferenzen steigern nämlich die Gefahr der Kompaktierung der Membran, woraus eine deutliche Reduktion der Membranpermeabilität resultiert. Für höhere Konzentrationen der gelösten Komponente oder bei Lösungsmittelgemischen, bei denen nicht eine der Komponenten in deutlich geringerer Konzentration vorliegt als die anderen, ist aber zu erwarten, dass die für eine erfolgreiche Trennung aufzuprägenden transmembranen Druckdifferenzen noch grösser sein müssten. Aus diesem Grunde ist mit den heute bekannten Umkehrosmosemembranen der Einsatz der Umkehrosmose zur Trennung von Flüssigkeitsgemischen sehr stark eingeschränkt.

Ausgehend von diesem Stand der Technik ist es daher eine Aufgabe der Erfindung, ein Verfahren zur Trennung von Flüssigkeitsgemischen, die mindestens zwei Komponenten enthalten, bereitzustellen, welches die erwähnten Nachteile und Beschränkungen nicht aufweist. Insbesondere soll mit dem Verfahren ein Flüssigkeitsgemisch auch dann in seine Komponenten aufgetrennt werden können, wenn es in azeotroper Zusammensetzung vorliegt. Das Verfahren soll es ermöglichen, das Azeotrop in nicht azeotrope Gemische aufzuspalten und die einzelnen Komponenten des Flüssigkeitsgemisches in möglichst reiner Form zu gewinnen. Das Verfahren soll mit geringem apparativen Aufwand auskommen und rationell und kostengünstig durchführbar sein. Das Verfahren soll ohne die Beimischung von Hilfskomponenten zu dem Flüssigkeitsgemisch möglich sein. Ferner soll das Verfahren für den Einsatz in der industriellen Produktion geeignet sein und deshalb die Trennung grosser Mengen von Gemischen ermöglichen. Auch ist es eine Aufgabe der Erfindung, eine Apparatur bereitzustellen, mit der das Verfahren zur Trennung von Flüssigkeitsgemischen durchführbar ist.

Die diese und noch andere Aufgaben in verfahrenstechnischer und apparativer Hinsicht lösenden Gegenstände der Erfindung sind durch die Merkmale des jeweiligen unabhängigen Patentanspruchs gekennzeichnet.

Weitere vorteilhafte Massnahmen und bevorzugte Ausgestaltungen ergeben sich aus den jeweiligen abhängigen Ansprüchen.

Im folgenden wird die Erfindung anhand von Ausführungsbeispielen und anhand der Zeichnung näher erläutert. In der schematischen, nicht massstäblichen Zeichnung zeigen:

Fig. 1: eine Blockschema eines Ausführungsbeispiels des erfindungsgemässen Verfahrens,

Fig. 2: eine schematische Darstellung eines Ausführungsbeispiels der erfindungsgemässen Apparatur mit den wesentlichen Teilen,

Fig. 3: eine schematische Darstellung einer ersten Abwandlung einer Filtervorrichtung der Apparatur, und

Fig. 4: eine schematische Darstellung einer zweiten Abwandlung der Filtervorrichtung.

Zum besseren Verständnis werden zunächst einige Begriffe erklärt, welche in der Trenntechnik und speziell in der Filtrations- und Membrantechnologie üblicherweise Verwendung finden und auch im folgenden in dieser Bedeutung benutzt werden:

Führt man eine Flüssigkeit einer Permeationsvorrichtung, die beispielsweise eine Membran oder ein Filtermittel enthalten kann, zu, so wird derjenige Teil der Flüssigkeit, der die Membran durchdringt, als "Permeat" bezeichnet, und derjenige Teil, der die Membran nicht durchdringt, als "Retentat".

Zur Charakterisierung der Trenneigenschaften einer Membran oder eines Filtermittels dient unter anderem der Rückhalt für die Komponenten der zugeführten Flüssigkeit. Dieser ist gegeben durch

$$1 - X_P/X_F$$

wobei $X_F$ den prozentualen Anteil angibt, mit dem eine Komponente in der zugeführten Flüssigkeit enthalten ist (Feedkonzentration), und $X_P$ den prozentualen Anteil, mit dem die gleiche Komponente im Permeat enthalten ist (Permeatkonzentration). Üblicherweise wird der Rückhalt in Prozent angegeben.

Als Mass für die Durchlässigkeit bzw. Porösität einer Membran oder eines Filtermittels dient ihre molekulare Trenngrenze (cut-off). Die molekulare Trenngrenze hat als Einheit g/mol und gibt das Molekulargewicht an, bei dem mindestens 90% der entsprechenden Substanz zurückgehalten werden. D.h. Komponenten der Flüssigkeit, deren Molekulargewicht, ausgedrückt in g/mol, grösser ist als die molekulare Trenngrenze der Membran, werden mindestens zu 90% von der Membran zurückgehalten.

Die folgenden Erläuterungen der Erfindung beziehen sich zum besseren Verständnis, aber rein beispielsweise, nur auf die Trennung von Flüssigkeitsgemischen, die zwei Komponenten enthalten. Sie gelten natürlich sinngemäss auch für solche Flüssigkeitsgemische, die mehr als zwei Komponenten enthalten. Weiterhin wird angenommen, dass zu Beginn des Verfahrens ein Flüssigkeitsgemisch in ungefähr azeotroper Zusammensetzung vorliegt. Es versteht sich jedoch, dass diese Annahme keinesfalls notwendig für die Erfindung ist. Falls das Flüssigkeitsgemisch ursprünglich keine azeotrope Zusammensetzung aufweist, so lassen sich beispielsweise durch Rektifikation oder andere dem Fachmann hinreichend bekannte Verfahren solange Komponenten aus dem Gemisch abtrennen, bis dieses eine ungefähr azeotrope Zusammensetzung aufweist.

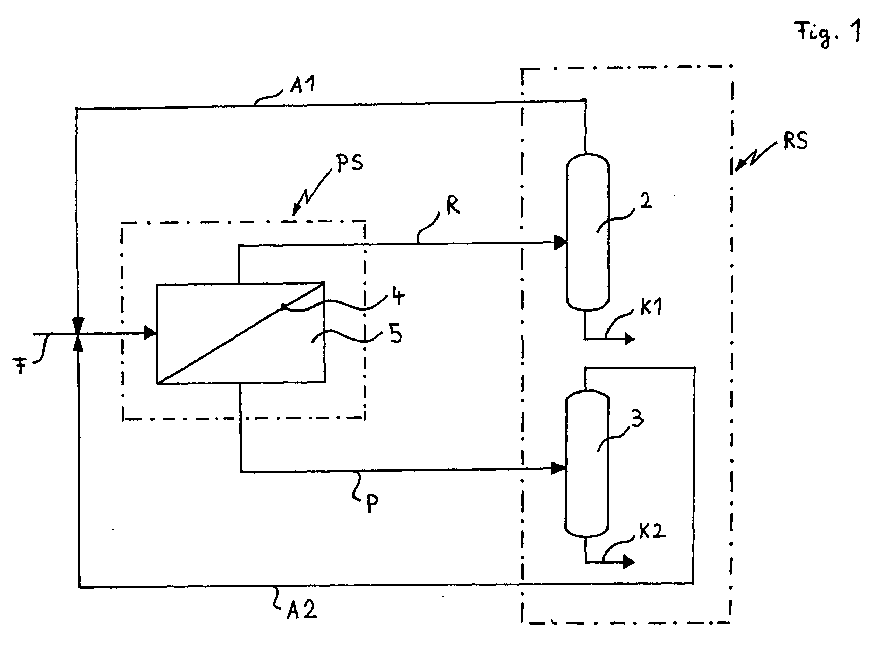

Fig. 1 zeigt ein Blockschema, das nur die zum Verständnis der Erfindung nötigen Elemente enthält, und soll ein Ausführungsbeispiel des erfindungsgemässen Verfahrens verdeutlichen. Das erfindungsgemässe Verfahren zur Trennung von Flüssigkeitsgemischen F, insbesondere azeotropen Flüssigkeitsgemischen, die mindestens zwei Komponenten K1, K2 enthalten, umfasst eine Permeationsstufe PS sowie eine Rektifikationsstufe RS. In der Permeationsstufe PS wird das Flüssigkeitsgemisch F in ein Retentat R und ein Permeat P aufgespalten. In der Rektifikationsstufe RS wird das Retentat R und/oder das Permeat P destilliert. Das erfindungsgemässe Verfahren ist insbesondere dadurch gekennzeichnet, dass das Flüssigkeitsgemisch F in der Permeationsstufe PS mittels einer Filtervorrichtung 5 gefiltert wird, die eine molekulare Trenngrenze aufweist, welche grösser ist, als jedes der Molekulargewichte der Komponenten K1, K2 des Flüssigkeitsgemisches F.

Bei dem in Fig. 1 dargestellten Ausführungsbeispiel des erfindungsgemässen Verfahrens wird das Flüssigkeitsgemisch F, welches in ungefähr azeotroper Zusammensetzung vorliegt, der Filtervorrichtung 5 zugeführt, wie dies durch den Pfeil F in Fig. 1 symbolisch angedeutet ist. In der Filtervorrichtung 5 wird nun das azeotrope Flüssigkeitsgemisch F in das Retentat R und das Permeat P aufgeteilt. Überraschenderweise zeigt sich, dass sowohl das Retentat R als auch das Permeat P deutlich von der azeotropen Zusammensetzung abweichen, obwohl die Filtervorrichtung 5 eine molekulare Trenngrenze aufweist, die grösser ist als jedes der Molekulargewichte der Komponenten K1 und K2. Besonders überraschend ist die Feststellung, dass auch für solche azeotropen Flüssigkeitsgemische F, deren Komponenten K1 und K2 ungefähr gleiche Molekulargewichte aufweisen, nach der Permeationsstufe PS das Permeat P und das Retenteat R deutlich von der azeotropen Zusammensetzung abweichen. Dies wird weiter hinten anhand eines Beispiels dokumentiert.

Die Filtervorrichtung 5 in der Permeationsstufe PS dient folglich dazu, das Azeotrop aufzubrechen bzw. den azeotropen Punkt zu überwinden. Sowohl im Permeat P als auch im Retentat R sind die Konzentrationsverhältnisse der beiden Komponenten K1 und K2 genügend stark verschoben, dass das Retentat R und das Permeat P in der anschliessenden Rektifikationsstufe RS mit an sich bekannten Rektifiziereinrichtungen 2, 3, die typischerweise Rektifizierkolonnen enthalten, destilliert werden können, wodurch sich die reinen Komponenten K1 und K2 gewinnen lassen.

Da sich das erfindungsgemässe Verfahren einer Filtrationsvorrichtung 5 zur Überwindung des azeotropen Punktes bedient, bedarf es keiner Beimischung von Hilfskomponenten in das Flüssigkeitsgemisch, die anschliessend wieder in aufwendiger Weise abgetrennt werden müssten. Dies ist aus mehreren Gründen vorteilhaft. Zum einen vermindert sich der apparative Aufwand erheblich, wodurch das Trennverfahren kostengünstiger durchführbar ist. Zum anderen wird die Gefahr vermieden, dass die Komponenten nach der Trennung noch Rückstände von solchen Hilfsmitteln enthalten. Somit eignet sich das erfindungsgemässe Verfahren auch für solche Anwendungen, bei denen sehr hohe Anforderungen an die Reinheit der aufgetrennten Komponenten gestellt werden, zum Beispiel Anwendungen in der pharmazeutischen Produktion.

Besonders bevorzugt umfasst die Permeationsstufe PS des erfindungsgemässen Verfahrens eine Nanofiltration. Bei der Nanofiltration werden üblicherweise zur Filtration Membranen eingesetzt, die eine offenere Struktur bzw. eine grössere Porösität aufweisen, als solche Membranen, die beispielsweise bei der Umkehrosmose Verwendung finden. Durch diese offenere Struktur der Membran lassen sich zum einen grössere Permeatströme erzielen, wodurch das Verfahren rationeller wird, zum anderen kann mit kleineren transmembranen Druckdifferenzen gearbeitet werden, wodurch eine störende Kompaktierung der Membran vermieden wird. Deshalb umfasst die Filtervorrichtung 5 bei dem erfindungsgemässen Verfahren bevorzugt eine Filtermembran 4, deren molekulare Trenngrenze grösser als 100g/mol, insbesondere grösser als 300g/mol, ist.

Während durch Umkehrosmosemembranen im allgemeinen nur Methanol, Wasser und ähnliche niedermolekulare Komponenten mit praktikablen Flussraten permeieren, ist die Nanofiltration aufgrund der offeneren Struktur der Membran nicht auf Flüssigkeitsgemische mit solchen niedermolekularen Komponenten beschränkt. Sie eignet sich auch für die Permeation von Komponenten mit höherem Molekulargewicht. Dies bringt den Vorteil mit sich, dass das erfindungsgemässe Verfahren für ein deutlich breiteres Spektrum an Flüssigkeitsgemischen geeignet ist als solche Trennverfahren, die beispielsweise eine Umkehrosmose beinhalten. So lassen sich mit dem erfindungsgemässen Verfahren beispielsweise auch Lösungsmittelgemische trennen, die als Komponenten Lösungsmittel enthalten, deren Molekulargewichte deutlich grösser sind als das von Wasser oder Methanol, z.B. ein Gemisch aus Cyclohexan und Ethylacetat, die beide ein Molekulargewicht von über 80 g/mol aufweisen.

Andererseits darf die Porösität der Membran bei der Nanofiltration auch nicht zu gross sein, weil sonst die Zusammensetzung des Retentats R und des Permeats P für die anschliessende Rektifikation nicht mehr ausreichend stark von der azeotropen Zusammensetzung abweicht. Aus diesem Grund ist die molekulare Trenngrenze der Filtermembran 4 bevorzugterweise kleiner als 1000g/mol, insbesondere kleiner als 600g/mol.

Solche Filtermembranen 4 an sich sind in verschiedenen Ausführungen bekannt und kommerziell erhältlich, beispielsweise von der Firma Membrane Products Kiryat Weizmann Ltd., Box 138 Rehovot 76101 Israel. Sie bedürfen daher keiner näheren Erläuterung.

Besonders günstig ist es, wenn die Permeationsstufe des erfindungsgemässen Verfahrens mit einem Rückhalt von weniger als 80%, insbesondere von weniger als 60%, für die am schlechtesten permeierende Komponente durchgeführt wird. Dies bedeutet, dass für keine der Komponenten K1, K2 des Flüssigkeitsgemisches F bei der Filtration ein Rückhalt von mehr als 80% erzielt wird. Zwar wird im allgemeinen bei Filtrationen ein Rückhalt von weniger als 90% für alle Komponenten als schlecht angesehen, aber für das erfindungsgemässe Verfahren ist der relativ geringe Rückhalt besonders vorteilhaft, weil sich hierdurch bei vergleichsweise niedrigen transmembranen Druckdifferenzen hohe Permeatflussraten erzielen lassen, wodurch das Verfahren rationeller und somit auch kostengünstiger wird. Zudem wird bei niedrigeren Druckdifferenzen eine Kompaktierung der Membran vermieden. Auch durch die hohen Permeatflussraten bedingt, eignet sich das Verfahren insbesondere für Anwendungen in der industriellen Produktion, wo üblicherweise grosse Mengen an zu trennendem Flüssigkeitsgemisch anfallen.

Im folgenden wird die Funktion der Permeationsstufe PS des erfindungsgemässen Verfahrens anhand eines Beispiels beschrieben.

Beispiel

Das Flüssigkeitsgemisch aus den beiden Lösungsmitteln Cyclohexan (Molekulargewicht 84,16 g/mol) und Ethylacetat (Molekulargewicht 88.11 g/mol) bildet bei einer Konzentration von etwa 50 Gewichtsprozent Cyclohexan und 50 Gewichtsprozent Ethylacetat ein Azeotrop. Es werden 140 g Cyclohexan und 140 g Ethylacetat vermischt, so dass das resultierende Flüssigkeitsgemisch ungefähr die azeotrope Zusammensetzung aufweist. Dieses Lösungsmittelgemisch wird bei 25°C mit einer Nanofiltrationsmembran vom Typ MPF-60 des Herstellers Membrane Products Kiryat Weizmann Ltd. (Israel) in ein Permeat und ein Retentat aufgeteilt. Die molekulare Trenngrenze (cut-off) dieser Filtermembran beträgt etwa 400 g/mol, ist also deutlich grösser als die oben angegebenen Molekulargewichte von Cyclohexan und Ethylacetat. Es wird eine transmembrane Druckdifferenz von 40 bar aufgeprägt. Der mittlere Permeatfluss beträgt 8 kg/(m$^2$h). Die erhaltene Permeatmenge beträgt nach einer bestimmten Zeit 110 g, wovon 40 g Cyclohexan und 70 g Ethylacetat sind. Das Retentat mit einer Gesamtmenge von 170 g enthält 100 g Cyclohexan und 70 g Ethylacetat. Das bedeutet, bezogen auf das Gewicht enthält das Permeat etwa 36% Cyclohexan und etwa 64% Etyhlacetat, das Retentat enthält etwa 59% Cyclohexan und etwa 41% Ethylacetat. Somit weicht die Zusammensetzung sowohl des Permeats als auch des Retentats deutlich von der azeotropen Zusammensetzung ab, so dass beide anschliessend rektifiziert werden können. Der Rückhalt der Filtermembran für die schlechter permeierende Komponente Cyclohexan ist in diesem Beispiel ungefähr 27%. Das nicht zu erwartende Ergebnis dieses Experimentes ist also, dass mittels der Filtermembran die Konzentrationsverhältnisse im Permeat und im Retentat relativ zu dem eingespeisten Lösungsmittelgemisch deutlich verschoben werden können, obwohl beide Komponenten ein Molekulargewicht haben, das ungefähr gleich ist und deutlich kleiner als die molekulare Trenngrenze der Filtermembran.

Wie bereits vorne erwähnt und in Fig. 1 dargestellt, werden nach der Permeationsstufe PS, in welcher das ursprünglich azeotrope Flüssigkeitsgemisch F in das Retentat R und das Permeat P aufgeteilt werden, deren Zusammensetzungen nun jeweils deutlich von der azeotropen abweichen, das Permeat P und das Retentat R rektifiziert. Dazu werden in diesem Ausführungsbeispiel das Permeat P und das Retentat R je einer der Rektifiziereinrichtungen 2, 3 zugeführt. Da die Rektifikation an sich ein wohl bekanntes Trennverfahren ist, für welches zahlreiche Vorrichtungen in diversen Ausführungsformen bekannt sind, bedarf sie keiner eingehenden Erläuterung. Die folgende Beschreibung für das in Fig. 1 dargestellte Ausführungsbeispiel des erfindungsgemässen Verfahrens beinhaltet deshalb nur das für das Verständnis Nötige, nicht aber die Einzelheiten der an sich bekannten Rektifikation.

Wie bereits erwähnt, weisen das Permeat P und das Retentat R, die in Fig. 1 symbolisch durch die Pfeile P und R dargestellt eine nicht azeotrope Zusammensetzung auf. Rein beispielsweise und ohne Beschränkung der Allgemeinheit enthält das Retentat R relativ zu der azeotropen Zusammensetzung einen Überschuss der Komponente K1, und das Permeat P enthält relativ zu der azeotropen Zusammensetzung einen Überschuss der Komponente K2. Ebenfalls mit beispielhaftem Charakter ist das zu trennende Flüssigkeitsgemisch F, welches eine ungefähr azeotrope Zusammensetzung hat, ein Minimumazeotrop. Das bedeutet, dass die Siedetemperatur als Funktion der Konzentration der Komponenten K1 und K2 bei der azeotropen Zusammensetzung ein Minimum aufweist, folglich das Azeotrop bei niedrigeren Temperaturen siedet als jede der beiden reinen Komponenten K1 bzw K2.

Das Retentat R wird der Rektifiziereinrichtung 2 zugeführt und in dieser rektifiziert. Dabei sammeln sich im Kopf und im Sumpf der Rektifiziereinrichtung 2 Destillationsprodukte. Da die im Bezug auf die azeotrope Zusammensetzung im Überschuss vorhandene Komponente K1 schwerer flüchtig ist als das Azeotrop, sammelt sich als Sumpfprodukt in der Rektifiziereinrichtung 2 die reine Komponente K1 und kann entnommen werden. Das Kopfprodukt in der Rektifiziereinrichtung 2 ist ein Gemisch der Komponenten K1 und K2, welches wiederum eine ungefähr azeotrope Zusammensetzung aufweist, weil das Azeotrop am leichtesten flüchtig ist. Dieses azeotrope Kopfprodukt wird, wie in Fig. 1 symbolisch durch den Pfeil A1 dargestellt, zumindest teilweise aus der Rektifiziereinrichtung 2 abgeführt und zu der Filtervorrichtung 5 zurückgeführt. Wie dies Fig. 1 zeigt, wird dazu das azeotrope Kopfprodukt A1 eingangsseitig der Filtervorrichtung 5 in das Flüssigkeitsgemisch F eingebracht und mit diesem zusammen in die Filtervorrichtung 5 eingespeist.

Das Permeat P wird der Rektifiziereinrichtung 3 zugeführt und in dieser rektifiziert. Dabei sammeln sich im Kopf und im Sumpf der Rektifiziereinrichtung 3 Destillationsprodukte. Da die im Bezug auf die azeotrope Zusammensetzung im Überschuss vorhandene Komponente K2 schwerer flüchtig ist als das Azeotrop, sammelt sich als Sumpfprodukt in der Rektifiziereinrichtung 3 die reine Komponente K2 und kann entnommen werden. Das Kopfprodukt in der Rektifiziereinrichtung 3 ist ein Gemisch der Komponenten K1 und K2, welches wiederum eine ungefähr azeotrope Zusammensetzung aufweist, weil das Azeotrop am leichtesten flüchtig ist. Dieses azeotrope Kopfprodukt wird, wie in Fig. 1 symbolisch durch den Pfeil A2 dargestellt, zumindest teilweise aus der Rektifiziereinrichtung 3 abgeführt und zu der Filtervorrichtung 5 zurückgeführt. Wie dies Fig. 1 zeigt, wird dazu das azeotrope Kopfprodukt A2 eingangsseitig der Filtervorrichtung 5 in das Flüssigkeitsgemisch F eingebracht und mit diesem zusammen in die Filtervorrichtung 5 eingespeist.

Auf diese Weise wird das Flüssigkeitsgemisch F effizient in seine reinen Komponenten K1 und K2 zerlegt, die jeweils als Sumpfprodukte den entsprechenden Rektifiziereinrichtungen 2 bzw. 3 entnommen werden können.

Natürlich eignet sich das erfinfdungsgemässe Verfahren auch für die Trennung von Flüssigkeitsgemischen F, die ein Maximumazeotrop bilden, bei denen also die Siedetemperatur als Funktion der Konzentration der Komponenten K1 und K2 bei der azeotropen Zusammensetzung ein Maximum aufweist, und folglich das Azeotrop bei höheren Temperaturen siedet als jede der beiden reinen Komponenten K1 und K2. Bei solchen Flüssigkeitsgemischen F sammeln sich die reinen Komponenten K1 bzw. K2 jeweils als Destillationsprodukte im Kopf der Rektifiziereinrichtung 2 bzw. 3. Die Destillationsprodukte im Sumpf der Rektifiziereinrichtungen 2 bzw. 3 weisen dann jeweils eine ungefähr azeotrope Zusammensetzung auf und können in analoger Weise wie oben beschrieben zu der Filtervorrichtung 5 zurückgeführt werden.

Da bei dem erfindungsgemässen Verfahren durch die Filtervorrichtung 5 die Konzentrationsverhältnisse derart verschoben werden, dass sowohl das Retentat R als auch das Permeat P eine Zusammensetzung aufweisen, die deutlich von der azeotropen abweicht, können für die Rektifikation relativ einfach aufgebaute und kleine Rektifiziereinrichtungen eingesetzt werden. Apparativ aufwendige und grosse Rektifiziereinrichtungen mit hohen Rücklaufverhältnissen, grossen Kreisströmen und einer grossen Anzahl theoretischer Böden, wie sie typischerweise in Zweidruckverfahren eingesetzt werden, sind für das erfindungsgemässe Verfahren nicht notwendig. Dies ist im Hinblick auf die Wirtschaftlichkeit ein grosser Vorteil des erfindungsgemässen Verfahrens. Ferner bietet das erfindungsgemässe Verfahren den Vorteil, dass die Rektifikation im wesentlichen unter Atmosphärendruck erfolgen kann, was insbesondere aus Sicherheitsgründen sehr wünschenswert ist.

Auch im Vergleich zu Kombinationsverfahren Pervaporation/Rektifikation bietet das erfindungsgemässe Verfahren den Vorteil, dass es apparativ einfacher durchführbar ist, weil aufwendige Vakuumvorrichtungen, wie sie typischerweise für die Pervaporation verwendet werden, nicht vonnöten sind. Weiterhin bietet das erfindungsgemässe Verfahren den Vorteil, dass es sich für die Trennung von einer deutlich grösseren Anzahl verschiedener Flüssigkeitsgemische eignet als Pervaporations/Rektifikations-Verfahren, die für praktisch Anwendungen auf eine eng begrenzte Art von Flüssigkeitsgemischen beschränkt sind.

Das erfindungsgemässe Verfahren kann auch derart ausgestaltet sein, dass die Filtration im Seitenstrom der Rektifiziereinrichtung erfolgt. Dazu wird während der Rektifikation ein Teil des Flüssigkeitsgemisches aus einer Rektifiziereinrichtung entnommen, dieser Teil wird der Filtervorrichtung zugeführt, und das Retentat R und/oder das Permeat P werden anschliessend wieder in die Rektifiziereinrichtung eingebracht. So ist es z. B. möglich, einer Rektifizierkolonne an einer Stelle, beispielsweise in der Nähe des Kopfes oder des Sumpfes, einen Teil des dort vorhandenen Flüssigkeitsgemisches zu entnehmen und diesen Teil durch die Filtervorrichtung in das Permeat und das Retentat auszuspalten, die dann bezüglich des Konzentrationsverhältnisses der einzelnen Komponenten jeweils eine andere Zusammensetzung aufweisen als der entnommene Teil des Flüssigkeitsgemisches. Anschliessend wird das Retentat oder das Permeat oder beide wieder in die Rektifiziereinrichtung eingespeist, wobei die Einspeisung an einer anderen Stelle, insbesondere auf einer anderen Höhe, erfolgt als die Entnahme des Flüssigkeitsgemisches. Diese Prinzip der Seitenstromentnahme an sich ist vom Stand der Technik her ausreichend bekannt und bedarf daher keiner näheren Erläuterung. Insbesondere ist dieses Prinzip zur Trennung von Flüssigkeitsgemischen geeignet, die mehr als zwei Komponenten enthalten.

Natürlich ist es auch möglich, das weiter vorne beschriebene und in Fig. 1 dargestellte Ausführungsbeispiel des erfindungsgemässen Verfahrens mit dem Prinzip der Seitenstromentnahme zu kombinieren.

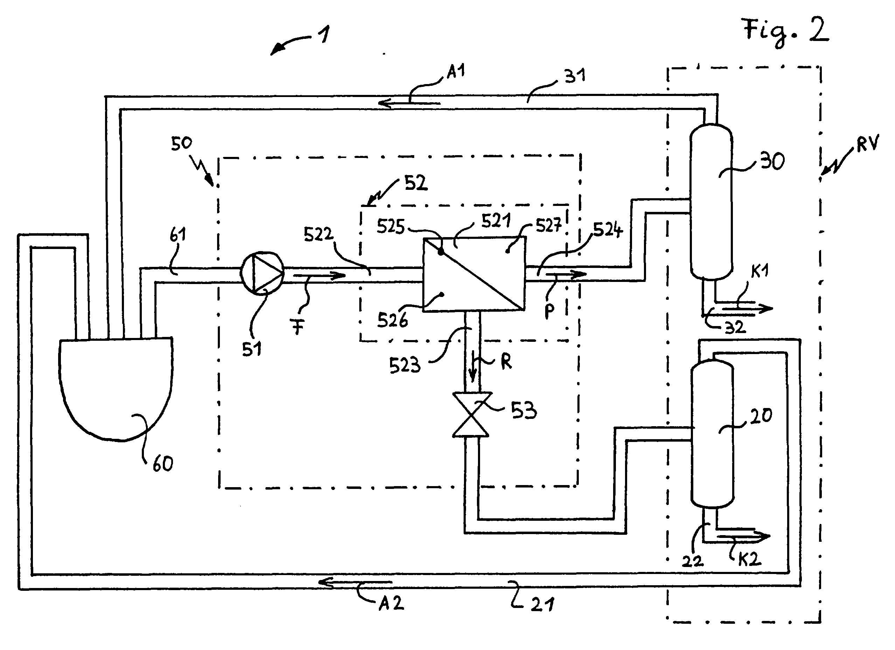

Im folgenden wird nun anhand eines Ausführungsbeispiels die erfindungsgemässe Apparatur beschrieben, die sich insbesondere für die Durchführung des erfindungsgemässen Verfahrens eignet. Fig. 2 zeigt eine schematische Darstellung dieses Ausführungsbeispiels der erfindungsgemässen Apparatur mit den wesentlichen Teilen. Die erfindungsgemässe Apparatur ist gesamthaft mit dem Bezugszeichen 1 versehen.

Die erfindungsgemässe Apparatur 1 zur Trennung von Flüssigkeitsgemischen F, insbesondere von azeotropen Flüssigkeitsgemischen, die mindestens zwei Komponenten K1 und K2 enthalten, umfasst eine Permeationsvorrichtung zur Auftrennung des Flüssigkeitsgemisches F in ein Retentat R und ein Permeat P sowie eine Rektifikationsvorrichtung RV zur Destillation des Retentats R und/oder des Permeats P. Die erfindungsgemässe Apparatur 1 ist insbesondere dadurch gekennzeichnet, dass die Permeationsvorrichtung als eine gesamthaft mit 50 bezeichnete Filtervorrichtung ausgestaltet ist, die eine Filtrationszelle 521 mit einer Filtermembran (525) umfasst, deren molekulare Trenngrenze grösser als 100 g/mol ist.

Bei dem in Fig. 2 dargestellten Ausführungsbeispiel umfasst die Filtervorrichtung 50 Fördermittel 51 zur Bewegung von Flüssigkeiten sowie ein Filtermodul 52, welches die Filtrationszelle 521 enthält. Das Filtermodul 52 weist ferner eine Zuführleitung 522 für das zu trennende Flüssigkeitsgemisch F, einer ersten Abführleitung 523 für das Retentat R und einer zweiten Abführleitung 524 für das Permeat P auf. Die Rektifikationsvorrichtung RV enthält zwei Rektifiziereinrichtungen 20,30, welche so mit den Abführleitungen 523,524 verbunden sind, dass das Retentat R und das Permeat P jeweils in eine der Rektifiziereinrichtungen 20 bzw. 30 gelangt.

Wie bereits weiter vorne im Zusammenhang mit dem erfindungsgemässen Verfahren erläutert, enthält die Filtrationszelle 521 besonders bevorzugt eine Filtermembran 525, deren molekulare Trenngrenze einerseits grösser als 100g/mol, insbesondere grösser als 300 g/mol ist, und andererseits kleiner als 1000g/mol, insbesondere kleiner als 600 g/mol, ist.

Bei dem in Fig. 2 dargestellten Ausführungsbeispiel befindet sich das zu trennende Flüssigkeitsgemisch F in einem Vorratsbehälter 60, von dem eine Leitung 61 zu dem Fördermittel 51, welches z. B. eine Pumpe enthält, führt. Von der Pumpe 51 erstreckt sich die Zuführleitung 522 des Filtermoduls 52 bis zu der Filtrationszelle 521. Die Filtrationszelle 521 ist durch die Filtermembran 525 in eine Retentatseite 526 und eine Permeatseite 527 aufgeteilt. Von der Retentatseite 526 führt die erste Abführleitung 523 des Filtermoduls 52 über ein Druckhalteventil 53 zum Eingang der Rektifiziereinrichtung 20. Von der Permeatseite 527 der Filtrationszelle 521 führt die zweite Abführleitung 524 des Filtermoduls 52 zum Eingang der Rektifiziereinrichtung 30.

Die Pumpe 51 dient auch dazu, zwischen ihr und dem Druckhalteventil 53, also insbesondere auch auf der Retentatseite 526 der Filtrationszelle 521, einen Druck zu erzeugen. Auf der Permeatseite 527 der Filtrationszelle 521 herrscht ein kleinerer Druck. Auf diese Weise entsteht über die Filtermembran 525 eine transmembrane Druckdifferenz, aufgrund derer sich das Flüssigkeitsgemisch in das Retentat R und das Permeat P aufteilt. Im Betriebszustand beträgt diese transmembrane Druckdifferenz typischerweise weniger als 100 bar, um eine Kompaktierung oder Beschädigung der Filtermembran zu vermeiden. Im Betriebszustand herrscht in der ersten Abführleitung 523 in Flussrichtung gesehen hinter dem Druckhalteventil 52 ebenso wie in der zweiten Abführleitung 524 beispielsweise im wesentlichen Atmosphärendruck.

Die Rektifiziereinrichtungen 20, 30 können beispielsweise jeweils kommerziell erhältliche Rektifizierkolonnen enthalten, z. B. solche mit Packungen vom Typ Kühni Rombopack 9M der Firma Kühni AG (Gewerbestrasse 28, CH-4123 Allschwil, Schweiz) oder Sulzer Mellapak 500Y der Firma Sulzer Chemtech AG (Hegifeldstrasse 10, CH-8404 Winterthur, Schweiz). Es versteht sich, dass die Rektifiziereinrichtungen 20,30 natürlich jeweils auch noch alle die Elemente enthalten, die üblicherweise bei Rektifikationen eingesetzt werden, wie beispielsweise Kondensatoren und Verdampfer. Diese Elemente sind in Fig. 2 nicht dargestellt, zum einen um die Darstellung übersichtlich zu halten und zum anderen, weil die Rektifikation an sich eine seit langem bekannte und praktizierte Trenntechnik ist, deren apparative Ausgestaltung dem Fachmann in zahlreichen Varianten hinreichend bekannt ist.

Weiterhin können zwischen dem Vorratsbeälter 60 und der Filtervorrichtung 50 sowie zwischen der Filtervorrichtung 50 und den Rektifiziereinrichtungen 20, 30 jeweils noch Mittel zur Veränderung der Temperatur, beispielsweise Wärmetauscher, vorgesehen sein, um die Temperatur des zu trennenden Flüssigkeitsgemisches F bzw. des Retentat R bzw. des Permeats P auf einen für den weiteren Prozessablauf optimalen Wert zu bringen.

In einer bevorzugten Ausgestaltung sind zwischen der Rektifikationsvorrichtung RV und der Filtervorrichtung 50 Rückführleitungen 21 bzw. 31 vorgesehen, um bei der Rektifikation entstehende Destillationsprodukte zu der Filtervorrichtung 50 zurückzuführen. In dem in Fig.2 dargestellten Ausführungsbeispiel verbinden die Rückführleitungen 21 bzw. 31 jeweils den Kopf einer der Rektifiziereinrichtungen 20, 30 mit dem Vorratsbehälter 60. Auf diese Weise ist es möglich, die bei der Rektifikation entstehenden Kopfprodukte - wie in Fig. 2 symbolisch durch die Pfeile A1 bzw. A2 angedeutet - zumindest teilweise zu dem Vorratsbehälter 60 zurückzuführen, sie in dem Vorratsbehälter 60 mit dem zu trennenden Flüssigkeitsgemisch zu vermischen, und sie dann durch die Leitung 61 wieder in die Filtervorrichtung 50 einzuspeisen. Am unteren Ende der Rektifiziereinrichtungen 20, 30 sind jeweils Entnahmeleitungen 22, 32 vorgesehen, um das jeweilige Sumpfprodukt aus den Rektifiziereinrichtungen 20, 30 zu entnehmen. Natürlich ist es auch möglich, dass die Rückführleitungen 21, 31 mit dem unteren Ende der Rektifiziereinrichtungen 20,30 verbunden sind und von dort zu dem Vorratsbehälter 60 führen, um das jeweilige Sumpfprodukt zumindest teilweise von den Rektifiziereinrichtungen 20, 30 zu der Filtervorrichtung 50 zurückzuführen.

Auch können die Entnahmeleitungen 22,32 am Kopf der jeweiligen Rektifiziereinrichtung 20, 30 vorgesehen sein.

Wie bereits erwähnt, eignet sich die erfindungsgemässe Apparatur insbesondere für die Durchführung des erfindungsgemässen Verfahrens, das weiter vorne detailliert beschrieben ist. Deshalb wird hier auf die Funktionsweise der Apparatur nicht mehr näher eingegangen. Die verfahrenstechnischen Erläuterungen gelten sinngemäss auch für die erfindungsgemässe Apparatur.

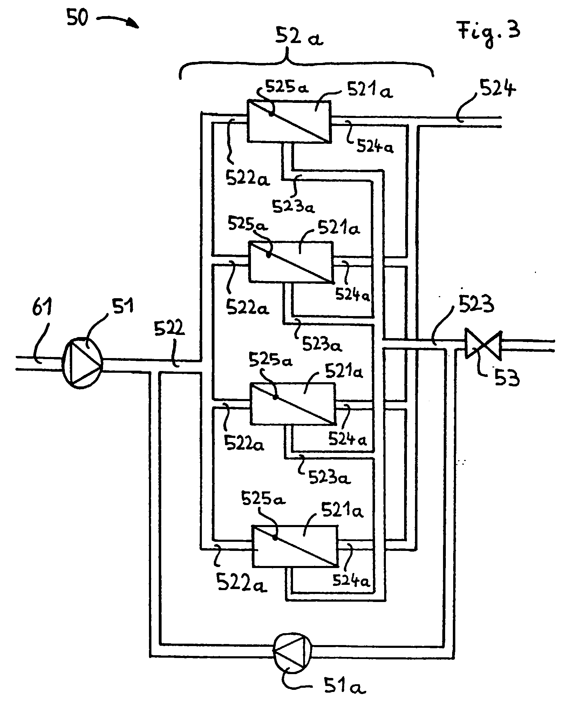

Fig. 3 zeigt in schematischer Darstellung eine erste Abwandlung für die Filtervorrichtung 50. Bei dieser Abwandlung umfasst das gesamthaft mit 52a bezeichnete Filtermodul mehrere parallel angeordnete Filtrationszellen 521a, jeweils mit einer separaten Zuführleitung 522a für das zu trennende Flüssigkeitsgemisch, einer separaten Abführleitung 523a für das Retentat und einer separate Abführleitung 524a für das Permeat. Jede der separaten Zuführleitungen 522a ist mit der Zuführleitung 522 des gesamten Filtermoduls 52a verbunden. Ferner ist jede der separaten Abführleitungen 523a für das Retentat mit der ersten Abführleitung 523 des gesamten Filtermoduls 52a verbunden, die wiederum zu dem Druckhalteventil 53 und der Rektifiziereinrichtung 20 (Fig. 2) führt. Jede der separaten Abführleitungen 524a für das Permeat ist mit der zweiten Abführleitung 524 des gesamten Filtermoduls 52a verbunden, die zu der Rektifiziereinrichtung 30 (Fig. 2) führt. Die Darstellung von vier Filterzellen 521a hat natürlich nur beispielhaften Charakter.

Durch diese Massnahme kann sich das durch die Leitung 61 kommende Flüssigkeitsgemisch auf mehrere Filterzellen aufteilen. Dies ist besonders vorteilhaft, weil die Fläche der einzelnen Filtermembranen 525a kleiner ausgelegt werden kann und somit die Gefahr einer Beschädigung der Membran signifikant reduziert wird. Ausserdem lassen sich bei mehrem kleineren Filtermembranen 525a im allgemeinen bessere Überströmungen erzielen als mit nur einer grossen Membran, deren Fläche so gross ist wie die Summe der Flächen der kleineren Membranen. Zusätzlich kann in der Filtervorrichtung 50 noch eine Rezirkulierpumpe 51a vorgesehen sein, mit welcher das Retentat wieder in die Zuführleitung 522 des gesamten Filtermoduls zurückgepumpt wird. Damit lässt sich die Überströmung der einzelnen Filtermembranen 525a noch weiter erhöhen.

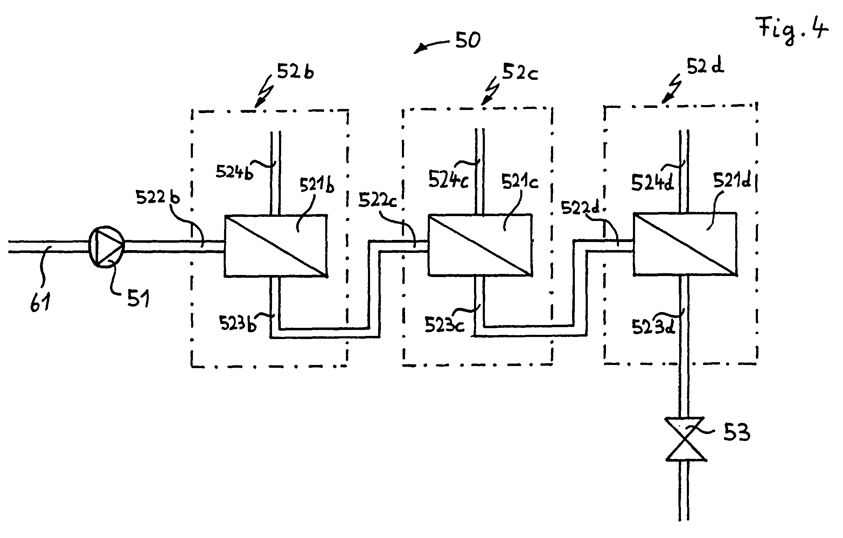

Fig. 4 zeigt in schematischer Darstellung eine zweite Abwandlung für die Filtervorrichtung 50. Die Filtervorrichtung 50 umfasst hier mehrere Filtermodule 52b, 52c, 52d, die in Transportrichtung des Flüssigkeitsgemisches hintereinander angeordnet sind, wobei jeweils die erste Abführleitung für das Retentat des vorangehenden Filtermoduls 52b, 52c mit der Zuführleitung des nachfolgenden Filtermoduls 52c,52d verbunden ist. Diese Anordnung hat den Vorteil, dass das zu trennende Flüssigkeitsgemisch mehrere Filtermembranen durchläuft, und somit die Konzentrationsverhältnisse im Permeat und im Retentat relativ zu dem eingespeisten Flüssigkeitsgemisch noch stärker verschoben werden können, wodurch die anschliessende Rektifikation effizienter durchführbar wird.

Die Zuführleitung 522b des in Flussrichtung ersten Filtermoduls 52b ist mit der Pumpe 51 verbunden. Die erste Abführleitung 523b für das Retentat des ersten Filtermoduls 52b ist mit der Zuführleitung 522c des in Flussrichtung zweiten Filtermoduls 52c verbunden. Die erste Abführleitung 523c für das Retentat des zweiten Filtermoduls 52c ist mit der Zuführleitung 523d des in Flussrichtung dritten und letzten Filtermoduls 52d verbunden. Die erste Abführleitung 523d des dritten Filtermoduls 52d führt über das Druckhalteventil 53 zu der Rektifiziereinrichtung 20 (Fig.2). Die zweiten Abführleitungen 524b, 524c, 524d der Filtermodule 52b, 52c, 52d für das Permeat können sich entweder zu einer nicht dargestellten gemeinsamen zweiten Abführleitung vereinigen, die dann zu der Rektifiziereinrichtung 30 (Fig.2) führt. Andererseits ist es aber auch möglich, dass die zweiten Abführleitungen 524b, 524c, 524d als voneinander getrennte Leitungen zu der Rektifiziereinrichtung 30 führen. Dies bringt den Vorteil mit dass die von den verschiedenen Filtermodulen 52a, 52b, 52c erzeugten Permeate an unterschiedlichen Stellen, insbesondere auf unterschiedlichen Höhen, in die Rektifiziereinrichtung 30 eingespeist werden können. Da die von den verschiedenen Filtermodulen 52a, 52b, 52c erzeugten Permeate im allgemeinen unterschiedliche Zusammensetzungen aufweisen, kann somit die Effizienz der Rektifikation gesteigert werden.

Es versteht sich, dass die Darstellung von drei Filtermodulen 52a, 52b, 52c in Fig. 4 nur beispielhaften Charakter hat. In Fig. 4 ist aus Gründen der besseren Übersicht in jedem der Filtermodule 52a, 52b, 52c nur eine Filterzelle 521b, 521c bzw. 521d dargestellt. Natürlich kann jedes der Filtermodule 52a, 52b, 52c, wie beispielsweise in Fig .3 dargestellt, wiederum mehrere parallel angeordnete Filterzellen enthalten. Auch können in jedem der Filtermodule 52a, 52b, 52c eine andere Anzahl von Filterzellen vorhanden sein. Besonders günstig ist es, wenn die Anzahl der parallel angeordneten Filterzellen in dem in Flussrichtung ersten Filtermodul am grössten ist, und jeweils das nachfolgende Filtermodul eine kleinere Anzahl von parallel angeordneten Filterzellen aufweist als das vorangehende Filtermodul, so dass das in Flussrichtung letzte Filtermodul die kleinste Anzahl von Filterzellen aufweist. Durch diese Massnahme lässt sich eine effizientere Überströmung erzielen. Die Anzahl der hintereinander angeordneten Filtermodule sowie die Anzahl der Filterzellen, die in den einzelnen Filtermodulen enthalten sind, lässt sich je nach Anwendungsgebiet der Apparatur unter Aspekten, wie z. B. Art und Menge des zu trennenden Flüssigkeitsgemisches und zu erzielende Trennleistung, auf empirische Weise oder durch theoretische Berechnungen optimieren.

## Patentansprüche

1. Verfahren zur Trennung von Flüssigkeitsgemischen (F), insbesondere azeotropen Flüssigkeitsgemischen, die mindestens zwei Komponenten (K1,K2) enthalten, umfassend eine Permeationsstufe (PS), in welcher das Flüssigkeitsgemisch (F) in ein Retentat (R) und ein Permeat (P) aufgeteilt wird, sowie eine Rektifikationsstufe (RS), in welcher das Retentat (R) und/oder das Permeat (P) destilliert werden, dadurch gekennzeichnet, dass das Flüssigkeitsgemisch (F) in der Permeationsstufe (PS) mittels einer Filtervorrichtung (5) gefiltert wird, die eine molekulare Trenngrenze aufweist, welche grösser ist als jedes der Molekulargewichte der Komponenten (K1,K2) des Flüssigkeitsgemisches.

2. Verfahren nach Anspruch 1, dadurch gekennzeichnet, dass die Permeationsstufe (PS) eine Nanofiltration umfasst.

3. Verfahren nach einem der vorangehenden Ansprüche, dadurch gekennzeichnet, dass die Filtervorrichtung (5) eine Filtermembran (4) umfasst, deren molekulare Trenngrenze grösser als 100 g/mol, insbesondere grösser als 300 g/mol ist.

4. Verfahren nach Anspruch 3, dadurch gekennzeichnet, dass die molekulare Trenngrenze der Filtermembran (4) kleiner als 1000 g/mol, insbesondere kleiner als 600 g/mol, ist.

5. Verfahren nach einem der vorangehenden Ansprüche, dadurch gekennzeichnet, dass die Permeationsstufe (PS) mit einem Rückhalt von weniger als 80%, insbesondere von weniger als 60%, für die am schlechtesten permeierende Komponente (K1,K2) durchgeführt wird.

6. Verfahren nach einem der vorangehenden Ansprüche, dadurch gekennzeichnet, dass ein bei der Rektifikation des Retentats (R) entstehende Destillationsprodukt zumindest teilweise zu der Filtervorrichtung (5) zurückgeführt und in diese eingespeist wird.

7. Verfahren nach einem der vorangehenden Ansprüche, dadurch gekennzeichnet, dass ein bei der Rektifikation des Permeats (P) entstehendes Destillationsprodukt zumindest teilweise zu der Filtervorrichtung (5) zurückgeführt und in diese eingespeist wird.

8. Verfahren nach einem der Ansprüche 1-5, dadurch gekennzeichnet, während der Rektifikation ein Teil des Flüssigkeitsgemisches aus einer Rektifiziereinrichtung entnommen wird, dieser Teil der Filtervorrichtung zugeführt wird, und das Retentat und/oder das Permeat anschliessend wieder in die Rektifiziereinrichtung eingebracht wird.

9. Verfahren nach einem der vorangehenden Ansprüche, dadurch gekennzeichnet, dass als zu trennendes Flüssigkeitsgemisch (F) ein Lösungsmittelgemisch verwendet wird.

10. Verfahren nach Anspruch 9, dadurch gekennzeichnet, dass das Lösungsmittelgemisch Cyclohexan und Ethylacetat als Komponenten (K1,K2) enthält.

11. Apparatur (1) zur Trennung von Flüssigkeitsgemischen (F), insbesondere von azeotropen Flüssigkeitsgemischen, die mindestens zwei Komponenten (K1,K2) enthalten, mit einer Permeationsvorrichtung zur Auftrennung des Flüssigkeitsgemisches (F) in ein Retentat (R) und ein Permeat (P), und mit einer Rektifikationsvorrichtung (RV) zur Destillation des Retentats (R) und/oder des Permeats (P), dadurch gekennzeichnet, dass die Permeationsvorrichtung als Filtervorrichtung (50) ausgestaltet ist, welche Filtervorrichtung (50) eine Filtrationszelle (521) mit einer Filtermembran (525) umfasst, deren molekulare Trenngrenze grösser als 100 g/mol ist.

12. Apparatur nach Anspruch 11, dadurch gekennzeichnet, dass die Filtervorrichtung (50) Fördermittel (51) zur Bewegung von Flüssigkeiten sowie ein Filtermodul (52) umfasst, welches die Filtrationszelle (521) enthält, und dass das Filtermodul (52) eine Zuführleitung (522) für das zu trennende Flüssigkeitsgemisch (F), eine erste Abführleitung (523) für das Retentat (R) und einer zweiten Abführleitung (524) für das Permeat (P) aufweist.

13. Apparatur nach Anspruch 12, dadurch gekennzeichnet, dass die Rektifikationsvorrichtung (RV) mindestens zwei Rektifiziereinrichtungen (20,30) enthält, welche so mit den Abführleitungen (523,524) verbunden sind, dass das Retentat (R) und das Permeat (P) jeweils in eine der Rektifiziereinrichtungen (20,30) gelangt.

14. Apparatur nach einem der Ansprüche 11-13, dadurch gekennzeichnet, dass die molekulare Trenngrenze der Filtermembran (525) grösser als 300 g/mol ist.

15. Apparatur nach einem der Ansprüche 11-14, dadurch gekennzeichnet, dass die molekulare Trenngrenze der Filtermembran (525) kleiner als 1000 g/mol, insbesondere kleiner als 600 g/mol, ist.

16. Apparatur nach einem der Ansprüche 11-15, dadurch gekennzeichnet, dass das Filtermodul (52a) mehrere parallel angeordnete Filtrationszellen (521a) umfasst.

17. Apparatur nach einem der Ansprüche 11-16, dadurch gekennzeichnet, dass die Filtervorrichtung (50) mehrere Filtermodule (52b,52c,52d) umfasst, die in Transportrichtung des Flüssigkeitsgemisches hintereinander angeordnet sind, wobei jeweils die erste Abführleitung (523b,523c) für das Retentat des vorangehenden Filtermoduls (52b,52c) mit der Zuführleitung (522c,522d) des nachfolgenden Filtermoduls (52c,52d) verbunden ist.

18. Apparatur nach einem der Ansprüche 11-17, dadurch gekennzeichnet, dass Rückführleitungen (21,31) zwischen der Rektifikationsvorrichtung (RV) und der Filtervorrichtung (50) vorgesehen sind.

Fig. 1

EP 0 793 997 A1

Fig. 2

Fig. 3

Fig. 4

EP 0 793 997 A1

**Europäisches Patentamt**

# EUROPÄISCHER RECHERCHENBERICHT

Nummer der Anmeldung

EP 96 81 0118

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y | DE-A-43 03 528 (BASF AG)<br><br>* das ganze Dokument *<br>--- | 1,2,6-9, 11-13,18 | B01D61/02<br>B01D3/36<br>B01D61/58 |
| Y | PATENT ABSTRACTS OF JAPAN<br>vol. 12, no. 202 (C-503), 10.Juni 1988<br>& JP-A-63 004826 (MITSUI ENG & SHIPBUILD CO LTD), 9.Januar 1988,<br>* Zusammenfassung *<br>--- | 1,2,6-9, 11-13,18 | |
| A,D | US-A-4 774 365 (M.S.CHEN ET AL)<br>* Ansprüche; Abbildungen *<br>--- | 1 | |
| A | PATENT ABSTRACTS OF JAPAN<br>vol. 12, no. 202 (C-503), 10.Juni 1988<br>& JP-A-63 004828 (MITSUBISHI HEAVY IND LTD), 9.Januar 1988,<br>* Zusammenfassung *<br>--- | 1 | |
| A | PATENT ABSTRACTS OF JAPAN<br>vol. 18, no. 597 (C-1273), 15.November 1994<br>& JP-A-06 226002 (SUMITOMO HEAVY IND LTD), 16.August 1994,<br>* Zusammenfassung *<br>--- | 11 | RECHERCHIERTE SACHGEBIETE (Int.Cl.6)<br><br>B01D |
| A | PATENT ABSTRACTS OF JAPAN<br>vol. 940, no. 10<br>& JP-A-06 277402 (SUMITOMO HEAVY IND LTD), 4.Oktober 1994,<br>* Zusammenfassung *<br>----- | 1,11 | |

Der vorliegende Recherchenbericht wurde für alle Patentansprüche erstellt

| Recherchenort | Abschlußdatum der Recherche | Prüfer |
|---|---|---|
| BERLIN | 10.September 1996 | Cordero Alvarez, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)